# EUROPEAN PATENT APPLICATION

(11) **EP 4 653 733 A1**
(43) Date of publication of application: **26.11.2025**
(21) Application number: 24744529.9
(22) Date of filing: 09.01.2024
(51) Int. Cl.: F16K 31/04

(54) **VALVE DEVICE**

(30) Priority: 18.01.2023 JP 2023005623
(71) Applicant: AISIN CORPORATION, Kariya-shi, Aichi 448-8650 (JP)
(72) Inventor: OIWA Toshiyuki, Kariya-shi, Aichi 448-8650 (JP); UEDA Masaki, Kariya-shi, Aichi 448-8650 (JP); FUJIOKA Hiroyuki, Kariya-shi, Aichi 448-8650 (JP); GENG Jinqun, Kariya-shi, Aichi 448-8650 (JP)
(74) Representative: TBK
(86) International application number: PCT/JP2024/000142
(87) International publication number: WO 2024/154606

(57) **Abstract**

A valve device includes a motor, a reduction mechanism configured to reduce a speed of power from the motor, a valve element to which power is transmitted from the reduction mechanism, and a housing that houses the valve element. The valve element includes a protrusion. The housing includes a stopper that the protrusion is able to contact.

## Description

### TECHNICAL FIELD

The present disclosure relates to a valve device.

### BACKGROUND ART

There is a known rotary type valve as a valve used for controlling a fluid for cooling an engine mounted in a vehicle (for example, Patent Literature 1). The rotary type valve disclosed in Patent Literature 1 includes a rotor, a casing that houses the rotor, a lid that covers the casing, and a rotary drive device (actuator) that rotationally drives the rotor. The actuator includes a motor and a reduction mechanism that reduces the speed of rotation of the motor. The reduction mechanism includes an output gear to which an output shaft connected to the rotor is coaxially attached. The output gear is formed with a groove (abutment portion) against which an angle stopper provided on a lid is caused to abut. In initializing processing executed at the time of manufacturing or the like, by rotating the rotor in one direction, the angle stopper is caused to abut against one end portion of the groove formed in the output gear and thereby the minimum angular position of the rotor corresponding to a fully closed position is obtained, and by rotating the rotor in the other direction, the angle stopper is caused to abut against the other end portion of the groove and thereby the maximum angular position of the rotor corresponding to a fully opened position is obtained. In actual control, the rotation angle of the rotor is controlled within a range from the minimum angular position to the maximum angular position.

### CITATION LIST

### PATENT LITERATURE

Patent Literature 1: JP 2013-249810 A

### SUMMARY OF INVENTION

### TECHNICAL PROBLEMS

In the valve disclosed in Patent Literature 1, each of the maximum angular position and the minimum angular position used in the actual control is obtained by causing the angle stopper provided in the actuator to abut against the abutment portion. However, backlash or the like also exists between a rotation shaft of the rotor and the output shaft. Therefore, there is a possibility that a difference occurs between an actual displacement amount by which the rotor is actually displaced and a command displacement amount determined by the control part or the like, and there is room for improvement in accuracy of the valve control.

The present disclosure has been made in view of the above problems, and the present disclosure provides a valve device that is controllable with high accuracy.

### SOLUTIONS TO PROBLEMS

A feature of a valve device according to the present disclosure is that the valve device includes a motor, a reduction mechanism configured to reduce a speed of power from the motor, a valve element to which power is transmitted from the reduction mechanism, and a housing that houses the valve element, in which the valve element includes a protrusion, and the housing includes a stopper that the protrusion is able to contact.

According to this configuration, for example, it is possible to obtain a correction amount with which a command displacement amount for driving the motor is corrected, on the basis of a posture at which the stopper included in the housing and the protrusion included in the valve element contact each other. In other words, it is possible to obtain the correction amount with which the command displacement amount is corrected, on the basis of an actual displacement amount, based on actuality (an environment closer to the actual environment in controlling a fluid), of the valve element, in the housing. That is, an error that occurs from the motor to the valve element is taken into consideration in the correction amount. Therefore, it is possible to control the valve device with high accuracy.

### BRIEF DESCRIPTION OF DRAWINGS

FIG. 1 is a view showing a configuration of a valve device according to an embodiment.
FIG. 2 is a view showing a configuration of the valve device according to the embodiment.
FIG. 3 is a view showing a second position of a rotor according to the embodiment.
FIG. 4 is a view showing a third position of the rotor according to the embodiment.
FIG. 5 is a view showing a fourth position of the rotor according to the embodiment.
FIG. 6 is a perspective view showing a configuration of the rotor according to the embodiment.
FIG. 7 is a plan view showing a configuration of the rotor according to the embodiment.
FIG. 8 is a plan view showing a configuration of a lid part according to the embodiment.
FIG. 9 is a view showing a vicinity of a first stopper according to the embodiment.
FIG. 10 is a view showing a vicinity of a second stopper according to the embodiment.
FIG. 11 is a diagram schematically showing a positional relationship between a protrusion and a stopper portion according to the embodiment.
FIG. 12 is a view showing a configuration of an actuator according to the embodiment.
FIG. 13 is a block diagram showing a configuration of the valve device according to the embodiment.
FIG. 14 is a graph showing temporal change in rotation angles of the rotor according to the embodiment.

### DESCRIPTION OF EMBODIMENTS

Hereinafter, a rotary valve will be described as an example of a valve device according to an embodiment of the present disclosure with reference to the drawings. However, the present disclosure is not limited to the following embodiments, and various modifications can be made without departing from the gist of the present disclosure.

### [Basic Configuration]

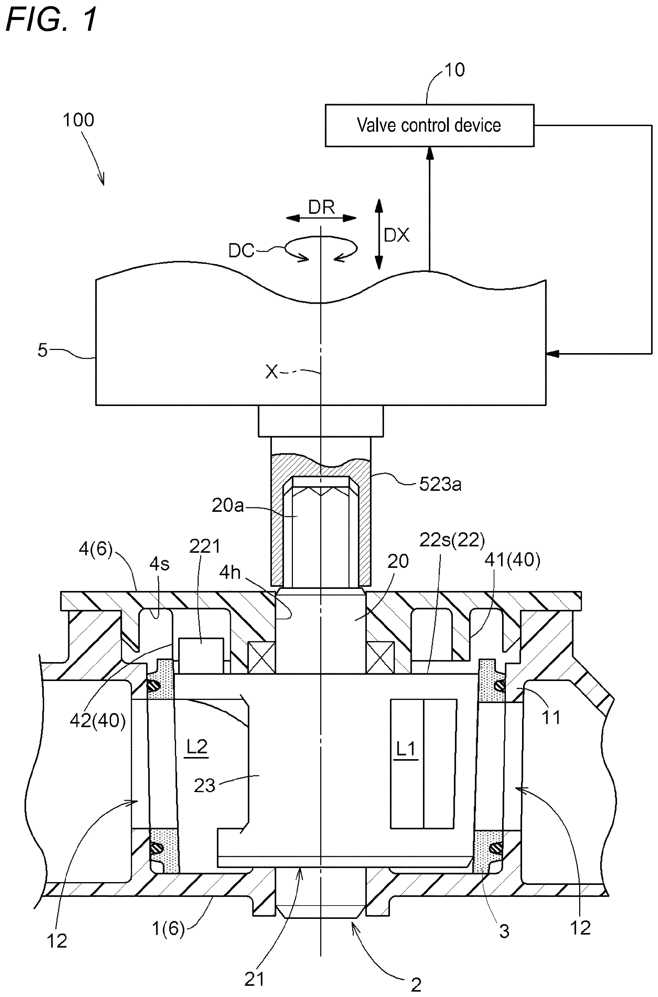

FIG. 1 is a view showing a configuration (longitudinal section) of a rotary valve 100. In the present embodiment, the rotary valve 100 is a five-way valve, and is used, for example, for controlling a fluid flowing to a cooling target device such as a battery or a motor mounted in a vehicle such as an automobile. The fluid is a cooling fluid such as a long life coolant (LLC).

As shown in FIG. 1, the rotary valve 100 includes a housing body 1, a rotor 2 (an example of a valve element) housed in an internal space of the housing body 1, a seal member 3 disposed between the housing body 1 and the rotor 2, a lid part 4 fixed to the housing body 1, an actuator 5 that drives the rotor 2, and a valve control device 10 (an example of a control part) that controls operation of the actuator 5. Note that the housing body 1 and the lid part 4 are included in a housing 6.

The rotor 2 rotates about an axis X by the operation of the actuator 5 being controlled by the valve control device 10. Hereinafter, a direction along the axis X is referred to as an "axial direction DX", a direction orthogonal to the axial direction DX is referred to as a "radial direction DR", and a circumferential direction of the rotor 2 is referred to as a "circumferential direction DC".

### [Housing Body]

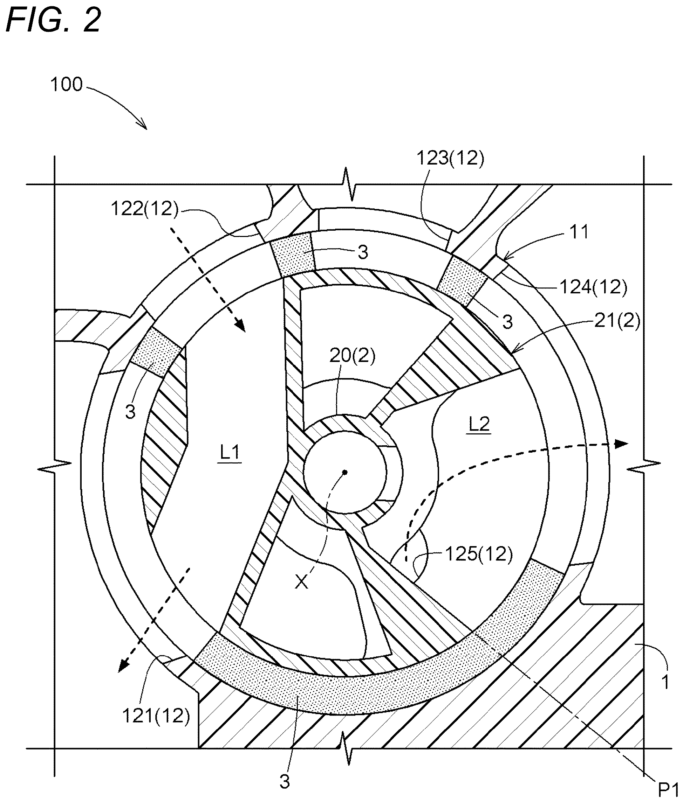

FIGS. 2 to 5 are views each showing a configuration (transverse section) of the rotary valve 100. As shown in FIGS. 2 to 5, a plurality of ports 12 are formed in a wall portion 11 of the housing body 1 along the circumferential direction DC. In the present embodiment, the four ports 12 are formed along the circumferential direction DC in the wall portion 11, and each of the four ports 12 penetrates the wall portion 11 in the radial direction DR. Hereinafter, the four ports 12 are respectively referred to as a "first port 121", a "second port 122", a "third port 123", and a "fourth port 124".

In addition, a fifth port 125, different from the first port 121, the second port 122, the third port 123, and the fourth port 124, is formed in a portion (bottom wall), of the wall portion 11, facing the lid part 4. The first port 121, the second port 122, the third port 123, the fourth port 124, and the fifth port 125 are connected to respective different external flow paths.

### [Rotor]

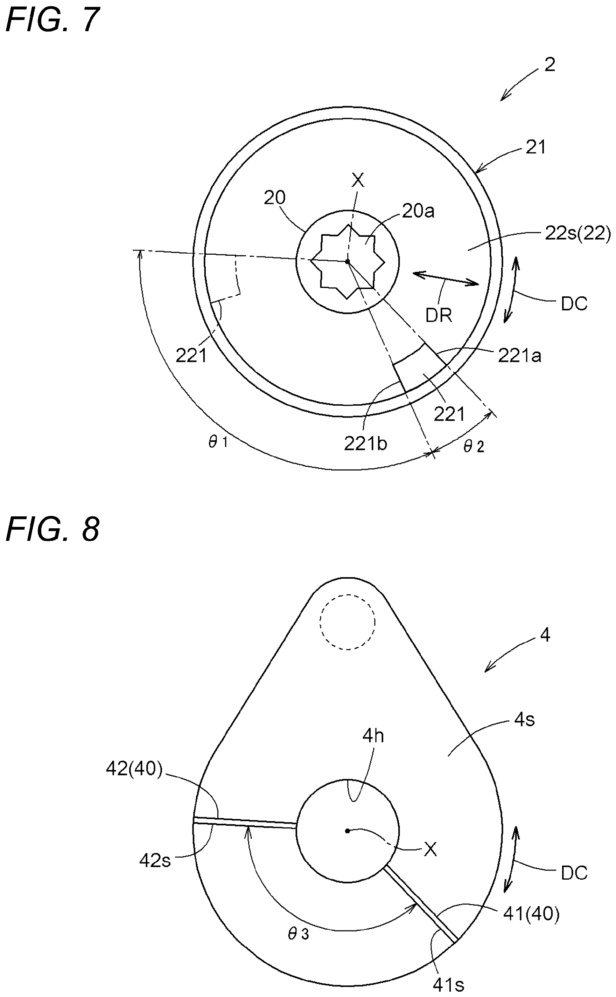

As shown in FIGS. 1, 6, and 7, the rotor 2 includes a shaft portion 20 extending in the axial direction DX and a valve portion 21 rotatable integrally with the shaft portion 20. The rotor 2 is made of resin, and in the rotor 2, the shaft portion 20 and the valve portion 21 are integrally formed. Note that FIG. 7 is a view of the rotor 2 as viewed in the axial direction DX from the lid part 4 side.

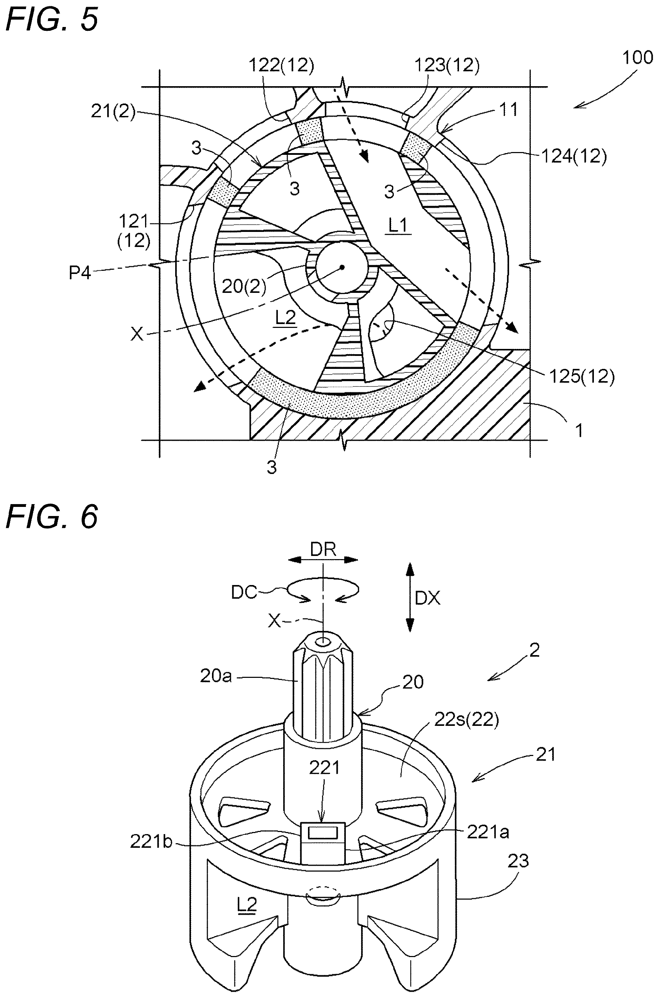

The shaft portion 20 includes an input end portion 20a to which power from the actuator 5 is input. As shown in FIG. 6, a plurality of triangular-section ridges arranged at equal intervals along the circumferential direction DC are formed in the input end portion 20a.

The valve portion 21 includes a top plate portion 22 extending in the radial direction DR from the shaft portion 20, and a body portion 23 extending in the axial direction DX from the top plate portion 22 to be away from the input end portion 20a.

Two flow paths L1, L2 through which the fluid flows are formed inside the body portion 23 (see FIG. 1). Hereinafter, the two flow paths are respectively referred to as a "first valve flow path L1" and a "second valve flow path L2".

As shown in FIGS. 2 to 5, when the rotor 2 is in each predetermined posture, the fluid flows through the first valve flow path L1 and the second valve flow path L2.

In the present embodiment, as shown in FIG. 2, when the posture of the rotor 2 is set to a first position P1, the fluid supplied to the second port 122 passes through the first valve flow path L1 and flows to the first port 121, and the fluid supplied to the fifth port 125 passes through the second valve flow path L2 and flows to the fourth port 124.

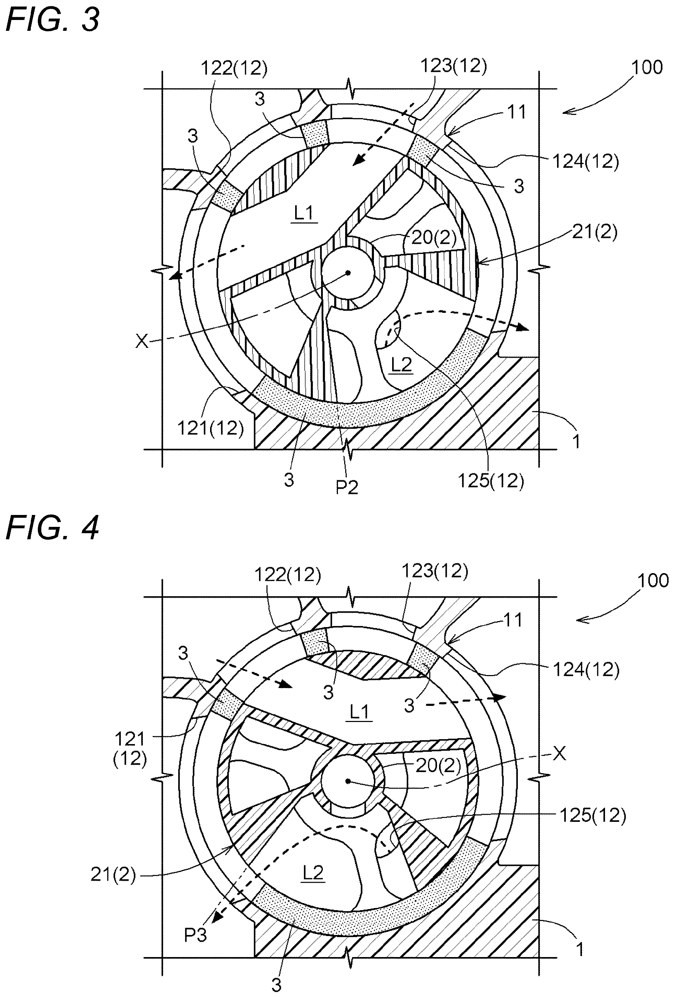

As shown in FIG. 3, when the posture of the rotor 2 is set to a second position P2, the fluid supplied to the third port 123 passes through the first valve flow path L1 and is supplied to the first port 121, and the fluid supplied to the fifth port 125 passes through the second valve flow path L2 and flows to the fourth port 124.

As shown in FIG. 4, when the posture of the rotor 2 is set to a third position P3, the fluid supplied to the second port 122 passes through the first valve flow path L1 and flows to the fourth port 124, and the fluid supplied to the fifth port 125 passes through the second valve flow path L2 and flows to the first port 121.

As shown in FIG. 5, when the posture of the rotor 2 is set to a fourth position P4, the fluid supplied to the third port 123 passes through the first valve flow path L1 and flows to the fourth port 124, and the fluid supplied to the fifth port 125 passes through the second valve flow path L2 and flows to the first port 121.

Note that the second position P2, the third position P3, and the fourth position P4 indicate postures at which the rotor 2 has rotated in a first direction (clockwise in FIGS. 2 to 5) by respective predetermined angles about the axis X from the first position P1, the second position P2, and the third position P3, respectively.

As described above, in the present embodiment, when the flow of the fluid is controlled, the rotor 2 changes its posture to any one of the first position P1, the second position P2, the third position P3, and the fourth position P4. In other words, the rotor 2 has a movable range that is between the first position P1 and the fourth position P4. That is, the maximum rotation angle (rotation angle formed when the posture is changed from the first position P1 corresponding to one end of the movable range to the fourth position P4 corresponding to the other end of the movable range) of the rotor 2 at the time when the flow of the fluid is controlled is an angle formed by the first position P1 and the fourth position P4 about the axis X. Hereinafter, an angle (movable range) formed by the first position P1 and the fourth position P4 about the axis X is defined as a first angle θ1 (see FIG. 7).

As shown in FIGS. 6 and 7, the top plate portion 22 has a circular shape as viewed in the axial direction DX. The top plate portion 22 includes a top-plate-side facing surface 22s facing the lid part 4 (see FIG. 1) fixed to the housing body 1, and a protrusion 221 erected from the top-plate-side facing surface 22s toward the input end portion 20a side in the axial direction DX (see FIG. 6). Note that the top-plate-side facing surface 22s extends in the radial direction DR from the shaft portion 20.

The protrusion 221 has a rectangular shape as viewed in the axial direction DX. The protrusion 221 includes a first protrusion surface 221a that is a flat surface along the radial direction DR and the axial direction DX, and a second protrusion surface 221b opposite to the first protrusion surface 221a in the circumferential direction DC. Hereinafter, an angle formed by the first protrusion surface 221a and the second protrusion surface 221b about the axis X is defined as a second angle θ2 (see FIG. 7). Note that in the present embodiment, the first protrusion surface 221a is set as a reference surface when the rotor 2 is processed, inspected, or the like.

### [Lid Part]

As shown in FIG. 1, the lid part 4 has a flat plate shape, and is fixed to the housing body 1. In a central portion of the lid part 4, a through hole 4h (an example of an opening) penetrating the lid part 4 in the axial direction DX is formed. The shaft portion 20 of the rotor 2 is inserted through the through hole 4h.

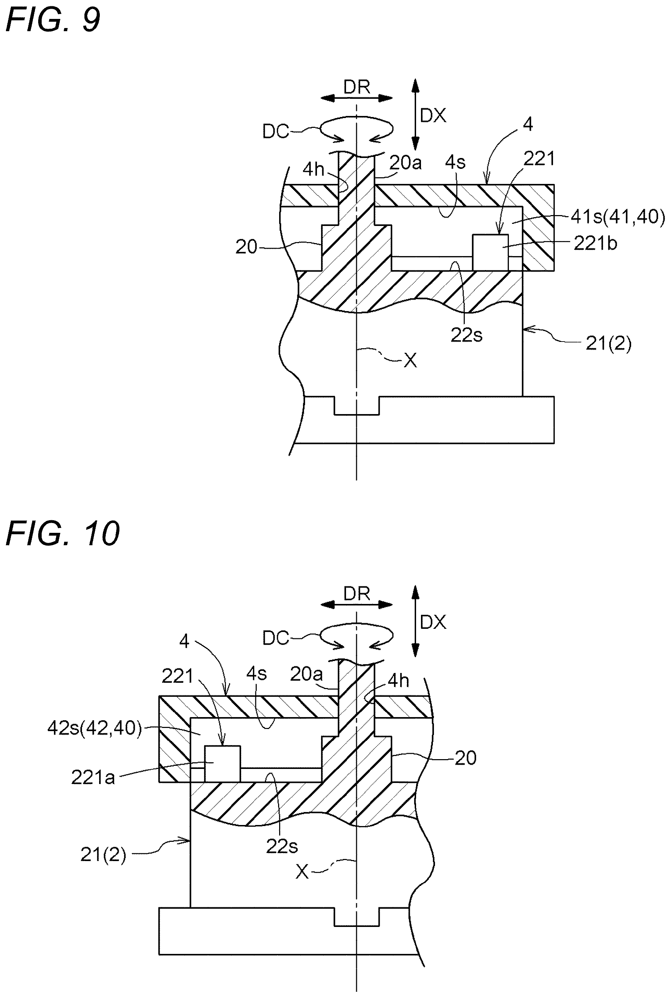

As shown in FIGS. 8 to 10, the lid part 4 includes a lid-side facing surface 4s (an example of a flat surface) facing the rotor 2 in a state where the lid part 4 is fixed to the housing body 1 housing the rotor 2, and a stopper portion 40 provided on the lid-side facing surface 4s. Note that FIG. 8 is a view of the lid part 4 as viewed in the axial direction DX from the rotor 2 side, FIG. 9 is an enlarged view showing a vicinity of a first stopper 41, and FIG. 10 is an enlarged view showing a vicinity of a second stopper 42. Note that a plurality of ribs (not shown) may be provided on the lid-side facing surface 4s in order to ensure rigidity of the lid part 4.

The stopper portion 40 includes the first stopper 41 and the second stopper 42 each extending (each continuously provided) outward in the radial direction DR from the through hole 4h. As shown in FIGS. 9 and 10, the first stopper 41 and the second stopper 42 are provided straight along the axial direction DX from the lid-side facing surface 4s of the lid part 4. Specifically, the first stopper 41 and the second stopper 42 protrude from the lid-side facing surface 4s toward the top-plate-side facing surface 22s of the rotor 2 to face the protrusion 221 in the circumferential direction DC in a state where the lid part 4 is fixed to the housing body 1 housing the rotor 2.

As shown in FIG. 8, the first stopper 41 includes a first stopper surface 41s that is a flat surface along the radial direction DR and the axial direction DX. In the present embodiment, the first stopper surface 41s is set as a reference surface when the lid part 4 is processed, inspected, or the like.

The second stopper 42 includes a second stopper surface 42s opposite to the first stopper surface 41s in the circumferential direction DC. Hereinafter, an angle formed by the second stopper surface 42s and the first stopper surface 41s about the axis X is defined as a third angle θ3.

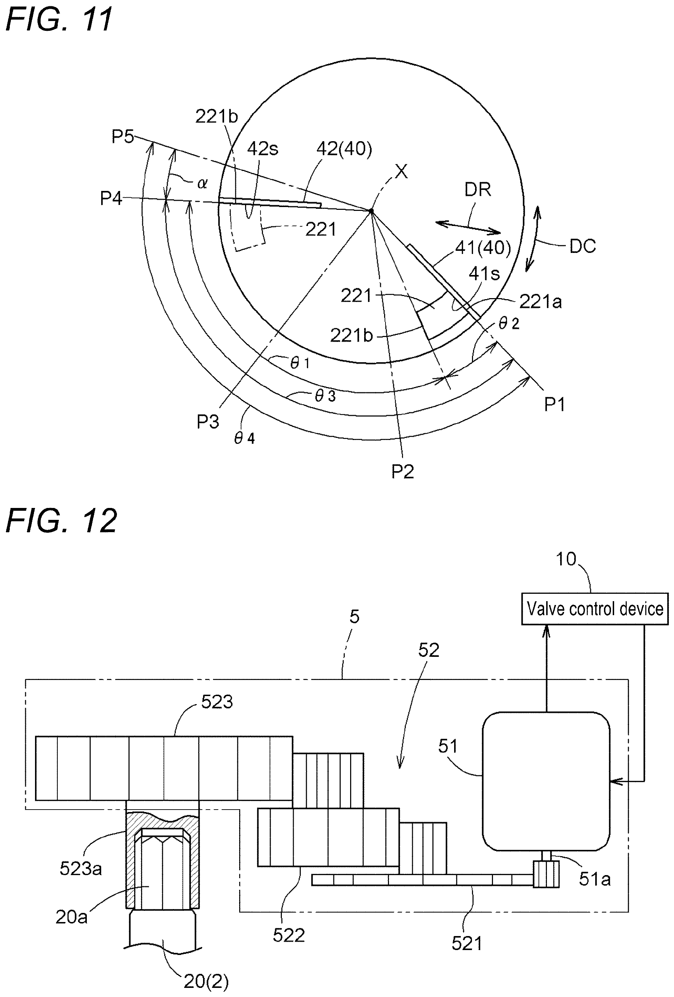

FIG. 11 is a diagram schematically showing a positional relationship between the protrusion 221 of the rotor 2 and the stopper portion 40 of the lid part 4. As shown in FIG. 11, in a state where the lid part 4 is fixed to the housing body 1 housing the rotor 2, the first stopper surface 41s faces the first protrusion surface 221a of the rotor 2 in the circumferential direction DC, and can contact the first protrusion surface 221a. In the present embodiment, when the posture of the rotor 2 is set to the first position P1 (an example of a first posture) corresponding to the one end of the movable range, the first stopper surface 41s contacts the first protrusion surface 221a of the rotor 2.

In addition, in a state where the lid part 4 is fixed to the housing body 1 housing the rotor 2, the second stopper surface 42s faces the second protrusion surface 221b of the rotor 2 in the circumferential direction DC, and can contact the second protrusion surface 221b. In the present embodiment, when the posture of the rotor 2 is set to the fourth position P4 (an example of a second posture) corresponding to the other end of the movable range, the second stopper surface 42s contacts the second protrusion surface 221b of the rotor 2.

That is, the third angle θ3 is set to an angle obtained by adding the second angle θ2 (the angle formed by the first protrusion surface 221a and the second protrusion surface 221b of the protrusion 221) to the first angle θ1 (the movable range of the rotor 2) described with reference to FIG. 6. Note that in the present embodiment, the first stopper surface 41s is provided on an outer side relative to the end of the movable range of the rotor 2, as viewed in the axial direction DX. Specifically, the first stopper surface 41s is provided at a position away from the end of the movable range of the rotor 2 by the angle (second angle θ2) formed by the first protrusion surface 221a and the second protrusion surface 221b (see FIGS. 6 and 7).

### [Actuator]

FIG. 12 is a view showing a configuration of the actuator 5. As shown in FIG. 12, the actuator 5 includes a motor 51 and a reduction mechanism 52. The motor 51 is supplied with electric power, and generates power for rotating the rotor 2. The reduction mechanism 52 reduces the speed of the power from the motor 51 at a predetermined speed reduction ratio, and transmits the power to the rotor 2.

The reduction mechanism 52 includes a first gear 521 that meshes with an output shaft 51a of the motor 51, a second gear 522 that meshes with the first gear 521, and a third gear 523 that meshes with the second gear 522. The third gear 523 includes an output shaft 523a mated with the input end portion 20a of the rotor 2, and the power from the motor 51 is transmitted to the output shaft 523a of the third gear 523 via the first gear 521, the second gear 522, and the third gear 523.

As described above, since the input end portion 20a of the rotor 2 is mated with the output shaft 523a, the power transmitted to the output shaft 523a is transmitted to the input end portion 20a of the rotor 2. As a result, the rotor 2 rotates about the axis X. Note that backlash or the like is provided between the output shaft 523a of the third gear 523 and the input end portion 20a of the rotor 2 and in the motor 51 to the third gear 523 (that is, in the reduction mechanism 52), and there may be a case in which the power is transmitted in a deviated (slow or fast) manner. Hereinafter, a deviation in power transmission caused by backlash or the like in the reduction mechanism 52 is referred to as a "first transmission power difference", and a deviation in power transmission caused by backlash or the like between the output shaft 523a of the third gear 523 and the input end portion 20a of the rotor 2 is referred to as a "second transmission power difference".

### [Valve Control Device]

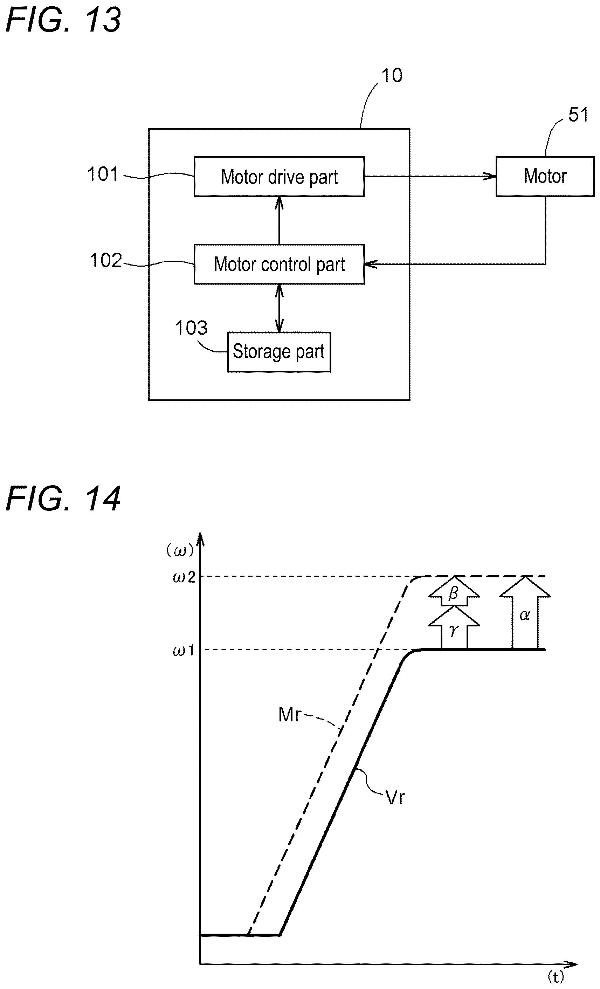

FIG. 13 is a block diagram showing a configuration of the valve control device 10. As shown in FIG. 13, the valve control device 10 includes a motor drive part 101, a motor control part 102, and a storage part 103. The storage part 103 includes, for example, a nonvolatile semiconductor memory.

The motor drive part 101 is a drive circuit for the motor 51, and supplies electric power to the motor 51 in accordance with a command signal from the motor control part 102. As a result, the motor 51 is driven. Note that the motor 51 is feedback-controlled.

For example, the motor control part 102 determines a rotation angle of the rotor 2 for changing the rotor 2 to a commanded posture (hereinafter, referred to as a "command rotation angle" (an example of a command displacement amount)), on the basis of a current posture of the rotor 2 and a command from a higher-level system (not shown) of the motor control part 102. The motor control part 102 includes a processor such as a central processing unit (CPU).

As described with reference to FIG. 12, since backlash or the like exists between the motor 51 and the rotor 2, there may be a case in which a difference occurs between the command rotation angle (rotation angle of the rotor 2 assuming that no backlash exists, that is, theoretical rotation angle) determined by the motor control part 102 and an actual rotation angle (an example of an actual displacement amount) of the rotor 2.

Therefore, the motor control part 102 executes correction amount obtaining processing for obtaining a correction amount with which the command rotation angle is corrected. The correction amount obtaining processing is executed at any time except during a period when processing of controlling the flow of the fluid (hereinafter, referred to as "fluid control processing") is being executed. The correction amount obtaining processing is executed, for example, when the vehicle in which the rotary valve 100 is mounted is started, when the vehicle is stopped, when the position of the rotor 2 is lost (when the valve control device 10 is unable to determine the current posture of the rotor 2), or the like. In the correction amount obtaining processing, the motor control part 102 actually causes the rotor 2 to rotate, and obtains the correction amount with which the command rotation angle is corrected, on the basis of the difference between the actual rotation angle and the command rotation angle, at the time of having actually caused the rotor 2 to rotate.

Specifically, as shown in FIG. 11, the motor control part 102 causes the posture of the rotor 2 to be set to the first position P1 at which the first protrusion surface 221a contacts the first stopper surface 41s, and then causes the posture of the rotor 2 to be changed from the first position P1 to the fourth position P4 at which the second protrusion surface 221b contacts the second stopper surface 42s. As a result, the motor control part 102 obtains an actual rotation angle of the rotor 2 at the time when the posture is changed from the first position P1 to the fourth position P4. Note that, for example, the motor control part 102 determines whether or not the posture of the rotor 2 has been changed to the fourth position P4 (the second protrusion surface 221b has contacted the second stopper surface 42s), on the basis of load variation of the motor 51.

That is, the motor control part 102 obtains, as an actual rotation angle, the angle (in the present embodiment, the first angle θ1) by which the rotor 2 has actually rotated when the posture has been changed from the first position P1 at which the first protrusion surface 221a contacts the first stopper surface 41s to the fourth position P4 at which the second protrusion surface 221b contacts the second stopper surface 42s.

In addition, the motor control part 102 obtains a command rotation angle corresponding to a command signal output to the motor drive part 101 at the time when the posture of the rotor 2 has been changed from the first position P1 to the fourth position P4.

In the present embodiment, the actual rotation angle is required to be a rotation angle smaller than the command rotation angle, and the command rotation angle is required to be a rotation angle larger than the actual rotation angle.

In the example shown in FIG. 11, a command rotation angle for actually rotating the rotor 2 from the first position P1 to the fourth position P4 corresponds to a rotation angle required for changing the position from the first position P1 to a fifth position P5 (hereinafter, referred to as a fourth angle θ4). That is, in the example shown in FIG. 11, the motor control part 102 obtains the fourth angle θ4 as the command rotation angle. The command rotation angle is obtained, on the basis of, for example, a detection result (for example, information on the rotation speed of the motor 51) from a sensor included in the motor 51.

Upon obtaining the command rotation angle and the actual rotation angle, the motor control part 102 obtains, on the basis of the difference therebetween, the correction amount with which the command rotation angle is corrected. In the example shown in FIG. 11, the motor control part 102 obtains, as a correction amount α, a value obtained by subtracting the first angle θ1 from the fourth angle θ4, and ends the correction amount obtaining processing. Note that information indicating the correction amount α is stored in the storage part 103 by the motor control part 102.

During the execution of the fluid control processing, after the motor control part 102 determines a command rotation angle (for example, a theoretical rotation angle for changing the position from the first position P1 to the second position P2) in accordance with a command from the higher-level system, in a case where control on the rotor 2 corresponds to a set condition, the motor control part 102 determines a command rotation angle after correction (hereinafter, referred to as "corrected command rotation angle") that has been corrected with the correction amount α stored in the storage part 103, and outputs a command signal in accordance with the corrected command rotation angle. The motor drive part 101 drives the motor 51 in accordance with the command signal output from the motor control part 102.

The set condition is a condition for controlling the rotor 2 with which a difference occurs between the command rotation angle determined by the motor control part 102 and the actual rotation angle of the rotor 2, and is set in advance by a designer or the like. In the present embodiment, as the set condition, a condition is set, with the rotor 2 at the first position P1 as a reference, in which the command rotation angle is corrected with the correction amount α when the rotor 2 is rotated in the first direction, and in which the command rotation angle is not corrected when the rotor 2 is rotated in a second direction (a direction opposite to the first direction). Note that the correction amount is preferably the same value even when there is a difference in the command rotation angle, but may have different values in accordance with the command rotation angles. In addition, for example, a program may be incorporated that, for example, corrects the correction amount at the time of yearly maintenance.

The relationship between an actual rotation angle of the rotor 2 and a command rotation angle after correction will be described below with reference to FIG. 14. FIG. 14 is a graph showing temporal change in rotation angles (an actual rotation angle and a command rotation angle after correction) of the rotor 2, in which the vertical axis represents a rotation angle ω of the rotor 2 and the horizontal axis represents time t. A solid line Vr indicates a temporal change in the actual rotation angle of the rotor 2, and a dashed line Mr indicates a temporal change in the command rotation angle after correction. Note that β shown in FIG. 14 indicates the first transmission power difference, that is, the difference between the actual rotation angle and the command rotation angle (theoretical rotation angle), caused by the backlash or the like in the reduction mechanism 52, and γ indicates the second transmission power difference, that is, the difference between the actual rotation angle and the command rotation angle (theoretical rotation angle), caused by the backlash or the like between the output shaft 523a of the third gear 523 and the input end portion 20a of the rotor 2. In addition, α indicates the correction amount obtained in advance in order to correct the first transmission power difference β and the second transmission power difference γ. The correction amount α corresponds to the sum of the rotation angles due to the first transmission power difference β and the second transmission power difference γ.

A rotation angle ω1 indicates a target rotation angle by which the rotor 2 is actually caused to rotate, and a rotation angle ω2 indicates a rotation angle (corrected command rotation angle) corresponding to a command signal output from the motor control part 102 to the motor drive part 101. As shown in FIG. 14, the motor control part 102 outputs the command signal corresponding to the rotation angle ω2 obtained by correcting the rotation angle ω1 with the correction amount α, whereby the motor control part 102 can cause the actual rotation angle of the rotor 2 to match with the target rotation angle.

### [Operation and Effects of Embodiment]

As described above, according to the present embodiment, the valve control device 10 can obtain the correction amount with which the command rotation angle for driving the motor 51 is corrected, on the basis of the posture at which the stopper portion 40 included in the lid part 4 and the protrusion 221 included in the rotor 2 contact each other. In other words, it is possible to obtain the correction amount with which the command rotation angle is corrected, on the basis of a rotation angle (actual rotation angle), based on actuality (an environment closer to the actual environment in controlling the fluid), of the rotor 2. That is, an error that occurs from the motor 51 to the rotor 2 is taken into consideration in the correction amount. Therefore, it is possible to control the valve device with high accuracy.

Further, according to the present embodiment, the stopper portion 40 contacts the protrusion 221 when the posture of the rotor 2 is set at the end of the movable range. Thus, the correction amount becomes a value in accordance with the range in which the rotor 2 actually moves when the fluid is controlled, and accuracy of the correction amount is improved. Moreover, along with this, a rotation angle of the rotor 2 for obtaining the correction amount is reduced, and it is possible to shorten a time required for obtaining the correction amount.

Further, according to the present embodiment, the valve control device 10 can obtain the correction amount, on the basis of the difference between the actual rotation angle, obtained by actually causing the protrusion 221 to contact each of the first stopper 41 and the second stopper 42 provided in the lid part 4, and the command rotation angle. That is, the correction amount is easily obtained, and it is possible to control the valve device with high accuracy.

Further, according to the present embodiment, the stopper portion 40 protrudes from the lid-side facing surface 4s of the lid part 4 toward the top-plate-side facing surface 22s to face the protrusion 221 in the circumferential direction DC of the rotor 2. Therefore, the protrusion 221 and the stopper portion 40 contact each other by the rotation of the rotor 2. In addition, the protrusion 221 can be provided by being erected from the top-plate-side facing surface 22s extending in the radial direction DR, and the stopper portion 40 can be provided by being protruded from the lid part 4, and thus it is easy to process the protrusion 221 and the stopper portion 40. Further, the rotary valve 100 is prepared simply by assembling the rotor 2 and the lid part 4 to the housing body 1, and thus it is also easy to assemble the rotor 2 and the lid part 4.

Further, according to the present embodiment, the stopper portion 40 extends outward in the radial direction DR from the through hole 4h. Therefore, the stopper portion 40 can has a large contact area with the protrusion 221 while maintaining strength. As a result, the protrusion 221 and the stopper portion 40 can more reliably contact each other. As a result, it is possible to obtain the correction amount with higher accuracy.

Further, according to the present embodiment, the first protrusion surface 221a and the first stopper surface 41s are set as reference surfaces for processing or the like. Thus, it is possible to further reduce noise such as an error due to processing. Therefore, the accuracy of the correction amount is improved, and it is possible to control the rotary valve 100 with high accuracy.

### [Other Embodiments]

The present disclosure may be configured as follows in addition to the embodiment described above (those having the same functions as those in the embodiment are denoted by the same reference numerals or reference signs as those in the embodiment).
(1) In the present embodiment, as an example, a configuration has been described in which the number of protrusions 221 is one and the stopper portion 40 includes the two stoppers (the first stopper 41 and the second stopper 42). However, the number of protrusions 221 may be two and the stopper portion 40 may be one stopper.
(2) In the present embodiment, the rotary valve 100 has been described as an example of the valve device. However, the valve device is not limited to the rotary valve 100, and may be, for example, an on-off valve that opens and closes a flow path through which a fluid flows.
(3) In the present embodiment, the rotary valve 100 as a five-way valve has been described as an example. However, the rotary valve 100 may be a three-way valve, a four-way valve, or the like. The number of ports 12 formed in the housing body 1 (wall portion 11) is changed as appropriate in accordance with the number of directions of the fluid controlled by the rotary valve 100.
(4) Further, the directions in which the fluid flows described with reference to FIGS. 2 to 5 are not limited to the cases described in the present embodiment, and each direction may be a direction opposite thereto.
(5) In the present embodiment, a case has been described in which the protrusion 221 is provided on the top-plate-side facing surface 22s. However, the position at which the protrusion 221 is provided is not limited to the top-plate-side facing surface 22s, and may be provided, for example, at an end of the rotor 2 on a side opposite to the top plate portion 22. In this case, the protrusion 221 may protrude in a direction away from the top plate portion 22, and the stopper portion 40 may be provided on a surface (bottom surface) facing the lid part 4 inside the housing body 1.
(6) In the present embodiment, as an example, a configuration has been described in which the first stopper 41 is provided such that the first stopper surface 41s contacts the first protrusion surface 221a of the rotor 2 when the posture of the rotor 2 is set to the first position P1 corresponding to the one end of the movable range, and in which the second stopper 42 is provided such that the second stopper surface 42s contacts the second protrusion surface 221b of the rotor 2 when the posture of the rotor 2 is set to the fourth position P4 corresponding to the other end of the movable range. However, at least one of the first stopper 41 and the second stopper 42 may be provided to contact the protrusion 221 when the posture of the rotor 2 is set outside the movable range. With this configuration, it is possible to reduce the number of times of contact between the protrusion 221 and at least one of the first stopper 41 and the second stopper 42, and it is possible to reduce wear of the protrusion 221 and at least one of the first stopper 41 and the second stopper 42.

In the above embodiments, the following configurations are conceived.
(1) A feature of a rotary valve 100 (valve device) according to the present disclosure is that the rotary valve 100 (valve device) includes a motor 51, a reduction mechanism 52 configured to reduce a speed of power from the motor 51, a rotor 2 (valve element) to which power is transmitted from the reduction mechanism 52, and a housing 6 that houses the rotor 2 (valve element), in which the rotor 2 (valve element) includes a protrusion 221, and the housing 6 includes each of a first stopper 41 and a second stopper 42 (each stopper) that the protrusion 221 is able to contact.

According to this configuration, for example, it is possible to obtain a correction amount with which a command displacement amount for driving the motor 51 is corrected, on the basis of a posture at which each of the first stopper 41 and the second stopper 42 (each stopper) included in the housing 6 contacts the protrusion 221 included in the rotor 2 (valve element). In other words, it is possible to obtain the correction amount with which the command displacement amount is corrected, on the basis of an actual displacement amount, based on actuality (an environment closer to the actual environment in controlling a fluid), of the rotor 2 (valve element), in the housing 6. That is, an error that occurs from the motor 51 to the rotor 2 (valve element) is taken into consideration in the correction amount. Therefore, it is possible to control the rotary valve 100 (valve device) with high accuracy.

(2) In the rotary valve 100 (valve device) according to (1), each of the first stopper 41 and the second stopper 42 (each stopper) may contact the protrusion 221 when a posture of the rotor 2 (valve element) is set at an end of a movable range.

According to this configuration, for example, the correction amount described above becomes a value in accordance with a range in which the rotor 2 (valve element) actually moves when the fluid is controlled, and accuracy of the correction amount is improved. Moreover, along with this, a displacement amount of the rotor 2 (valve element) for obtaining the correction amount is reduced, and it is possible to shorten a time required for obtaining the correction amount.

(3) In the rotary valve 100 (valve device) according to (1), each of the first stopper 41 and the second stopper 42 (each stopper) may contact the protrusion 221 when a posture of the rotor 2 (valve element) is set outside a movable range.

According to this configuration, it is possible to reduce the number of times of contact between the protrusion 221 and each of the first stopper 41 and the second stopper 42 (each stopper), and it is possible to reduce wear of the protrusion 221 and each of the first stopper 41 and the second stopper 42 (each stopper).

(4) The rotary valve 100 (valve device) according to (2) or (3) may further include a valve control device 10 (control part) configured to control operation of the motor 51, in which the valve control device 10 (control part) may obtain a correction amount with which a command displacement amount for the rotor 2 (valve element) is corrected, based on a difference between the command displacement amount for the rotor 2 (valve element) and an actual displacement amount by which the rotor 2 (valve element) has been actually displaced, and the actual displacement amount may be a displacement amount of the rotor 2 (valve element) actually obtained when the rotor 2 (valve element) has been displaced from a first posture at which the protrusion 221 contacts the first stopper 41 out of the first stopper 41 and the second stopper 42 (a plurality of the stoppers) to a second posture at which the protrusion 221 contacts the second stopper 42 out of the first stopper 41 and the second stopper 42 (the plurality of the stoppers).

According to this configuration, the valve control device 10 (control part) can obtain the correction amount, on the basis of the difference between the actual displacement value, obtained by actually causing the protrusion 221 to contact each of the first stopper 41 and the second stopper 42 provided in the housing 6, and the command displacement amount. That is, the correction amount is easily obtained, and it is possible to control the rotary valve 100 (valve device) with high accuracy.

(5) In the rotary valve 100 (valve device) according to any one of (1) to (4), the rotor 2 (valve element) may be a rotor 2 configured to rotate about an axis X.

In a case where the rotor 2 (valve element) is the rotor 2 that rotates about the axis X as in this configuration, the above configuration functions effectively because high accuracy is required in controlling the fluid.

(6) In the rotary valve 100 (valve device) according to (5), the rotor 2 may include a shaft portion 20 extending along the axis X, and a lid-side facing surface 4s (flat surface) extending in a radial direction DR orthogonal to the axis X, from the shaft portion 20, the protrusion 221 may be erected along the axis X, from the lid-side facing surface 4s (flat surface), the housing 6 may include a lid part 4 formed with a through hole 4h (opening) through which the shaft portion 20 is inserted, and each of the first stopper 41 and the second stopper 42 (each stopper) may protrude from the lid part 4 toward the lid-side facing surface 4s (flat surface) to face the protrusion 221 in a circumferential direction DC of the rotor 2.

According to this configuration, the protrusion 221 contacts each of the first stopper 41 and the second stopper 42 (each stopper) by the rotation of the rotor 2. In addition, the protrusion 221 can be provided by being erected from the lid-side facing surface 4s (flat surface) extending in the radial direction DR, and each of the first stopper 41 and the second stopper 42 (each stopper) can be provided by being protruded from the lid part 4, and thus it is easy to process these components. Further, the rotary valve 100 (valve device) is prepared simply by housing the rotor 2 inside the housing body 1 that the housing 6 includes separately from the lid part 4 and assembling the lid part 4 to the housing body 1, and thus it is also easy to assemble the rotor 2 and the lid part 4.

(7) In the rotary valve 100 (valve device) according to (6), each of the first stopper 41 and the second stopper 42 (each stopper) may extend outward in the radial direction DR from the through hole 4h (opening).

According to this configuration, by extending each of the first stopper 41 and the second stopper 42 (each stopper) outward in the radial direction DR, it is possible to have a large contact area with the protrusion 221 while maintaining strength. Thus, the protrusion 221 can more reliably contact each of the first stopper 41 and the second stopper 42 (each stopper). As a result, it is possible to obtain the correction amount with higher accuracy.

### INDUSTRIAL APPLICABILITY

The present disclosure is applicable to a valve device.

### REFERENCE SIGNS LIST

2: Rotor (valve element), 4: Lid part, 4h: Through hole (opening), 4s: Lid-side facing surface (flat surface), 6: Housing, 10: Valve control device (control part), 20: Shaft portion, 40: Stopper portion, 41: First stopper, 42: Second stopper, 51: Motor, 52: Reduction mechanism, 100: Rotary valve (valve device), 221: Protrusion, DC: Circumferential direction, DR: Radial direction, and X: Axis

## Claims

1. A valve device comprising:
a motor;
a reduction mechanism configured to reduce a speed of power from the motor;
a valve element to which power is transmitted from the reduction mechanism; and
a housing that houses the valve element,
wherein
the valve element includes a protrusion, and
the housing includes a stopper that the protrusion is able to contact.

2. The valve device according to claim 1, wherein the stopper contacts the protrusion when a posture of the valve element is set at an end of a movable range.

3. The valve device according to claim 1, wherein the stopper contacts the protrusion when a posture of the valve element is set outside a movable range.

4. The valve device according to claim 2 or 3, further comprising a control part configured to control operation of the motor,
wherein
the control part is configured to obtain a correction amount with which a command displacement amount for the valve element is corrected, based on a difference between the command displacement amount for the valve element and an actual displacement amount by which the valve element has been actually displaced, and
the actual displacement amount is a displacement amount of the valve element actually obtained when the valve element has been displaced from a first posture at which the protrusion contacts a first stopper out of a plurality of the stoppers to a second posture at which the protrusion contacts a second stopper out of the plurality of the stoppers.

5. The valve device according to claim 1 or 2, wherein the valve element is a rotor configured to rotate about an axis.

6. The valve device according to claim 5, wherein
the rotor includes a shaft portion extending along the axis, and a flat surface extending in a radial direction orthogonal to the axis, from the shaft portion,
the protrusion is erected along the axis, from the flat surface,
the housing includes a lid part formed with an opening through which the shaft portion is inserted, and
the stopper protrudes from the lid part toward the flat surface to face the protrusion in a circumferential direction of the rotor.

7. The valve device according to claim 6, wherein the stopper extends outward in the radial direction from the opening.
